# EUROPEAN PATENT SPECIFICATION

(11) **EP 3 426 036 B1**
(45) Date of publication and mention of the grant of the patent: **30.08.2023**
(21) Application number: 17706457.3
(22) Date of filing: 21.02.2017
(51) Int. Cl.: A01N 43/56, A01P 21/00

(54) **CROP ENHANCEMENT**
ZUCHTVERBESSERUNG
AMÉLIORATION DE PLANTES CULTIVÉES

(30) Priority: 08.03.2016 GB 201603965
(43) Date of publication of application: 16.01.2019
(73) Proprietor: Syngenta Participations AG, 4058 Basel (CH)
(72) Inventor: GUICHERIT, Eric, 4058 Basel (CH); HARP, Tyler, Lee, Greensboro, North Carolina 27409 (US); LEIPNER, Joerg, 4332 Stein (CH); BARTSCH, Michael, 4332 Stein (CH); KUZNETSOV, Dmitry, 4058 Basel (CH); RAMBACH JANKOWSKI, Odile, 4058 Basel (CH)
(74) Representative: SYNGENTA IP
(86) International application number: PCT/EP2017/053882
(87) International publication number: WO 2017/153162

(56) References cited:
- EP-A1- 2 885 970
- WO-A1-2013/104609
- WO-A1-2013/127818
- WO-A1-2013/127857
- WO-A1-2016/044563
- WO-A2-2014/037202
- US-A1- 2014 135 213
- US-A1- 2015 296 782
- US-A1- 2015 313 223
- DATABASE CA [Online] CHEMICAL ABSTRACTS SERVICE, COLUMBUS, OHIO, US; ZHANG, WEI ET AL: "Fungicidal composition containing benzovindiflupyr", XP002768890, retrieved from STN Database accession no. 2016:638950 & CN 105 494 404 A (SHAANXI MEIBANG PESTICIDE CO., LTD., PEOP. REP. CHINA) 20 April 2016 (2016-04-20)

## Description

The present invention relates to a method of crop enhancement. In particular, it relates to a method of enhancing crop plants in increasing tolerance and/or resistance to abiotic stress factors by applying to the plants, plant parts, plant propagation material, or a plant growing locus, a compound of formula I, and to the use of said compound for enhancing crops in increasing tolerance and/or resistance to abiotic stress factors.

Certain methods of crop enhancement are described in the literature. These methods are usually based on conventional fertilising but some also rely on chemicals originally developed for other uses, for example, the insecticide fipronil has been reported e.g. to enhance overall root system and root hair development, increase tiller number and productivity, increase photosynthetic capacity (plant greenness), increase leaf area and plant height and stimulate early flowering and grain maturation and the fungicide pyraclostrobin has been reported to improve plant health e.g. to improve the tolerance to environmental stresses.

WO 2007/048556 describes new fungicidally active heterocyclic amide derivatives.

WO2013/104609, EP2885970, WO2013/127857, US2015/296782, US2015/0313223, US2014/0135213, WO2014/037202, and WO 2013/127818 describe fungicidal mixtures as improving growth in crops.

It has now been found that some of these compounds, in addition to their fungicidal action, also show crop enhancement effects by increasing tolerance and/or resistance to abiotic stress factors.

WO 2016/044563 A1 (prior art according to article 54(3) EPC) discloses a composition for enhancing plant growth and/or promoting plant health comprising a recombinant exosporium-producing Bacillus cells and a fungicide. The use of benzovindiflupyr for increasing tolerance and/or resistance to abiotic stress factors is not mentioned therein.

Accordingly, the present invention provides a method of enhancing crops in increasing tolerance and/or resistance to abiotic stress factors, by applying to the plants, plant parts, plant propagation material, or a plant growing locus, a compound of formula I

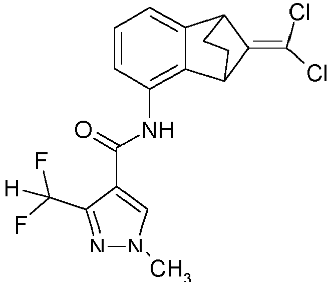

The present invention also provides the use of a compound of formula I for enhancing crops in increasing tolerance and/or resistance to abiotic stress factors.

The compound of formula I occurs in two different stereoisomers, which are described as the single enantiomers of formulae I_{I} and I_{II}:

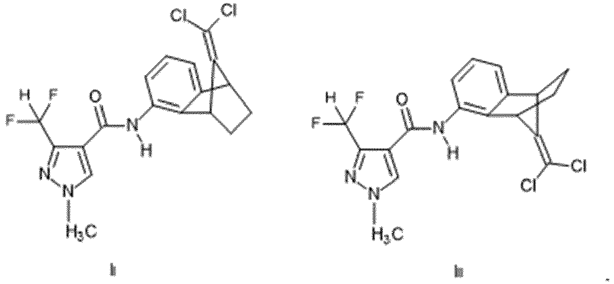

The invention covers all such stereoisomers and mixtures thereof in any ratio. According to the invention "racemic compound of formula I" means a racemic mixture of compounds of formula I_{I} and I_{II}.

The compound of formula (I) may be prepared as described in WO 2007/048556.

According to the present invention, certain traits are improved qualitatively or quantitatively when compared with the same trait in a control plant which has been grown under the same conditions in the absence of the method of the invention. These traits are an increased tolerance and/or resistance to abiotic stress factors which cause sub-optimal growing conditions such as drought (e.g. any stress which leads to a lack of water content in plants, a lack of water uptake potential or a reduction in the water supply to plants), cold exposure, heat exposure, osmotic stress, UV stress, flooding, increased salinity (e.g. in the soil), increased mineral exposure, ozone exposure, high light exposure and/or limited availability of nutrients (e.g. nitrogen and/or phosphorus nutrients). In the case of drought and nutrient stress, such improved tolerances may be due to, for example, more efficient uptake, use or retention of water and nutrients.

Any or all of the above crop enhancements may lead to an improved yield by improving e.g. plant physiology, plant growth and development and/or plant architecture. In the context of the present invention `yield' includes, but is not limited to, (i) an increase in biomass production, grain yield, starch content, oil content and/or protein content, which may result from (a) an increase in the amount produced by the plant *per se* or (b) an improved ability to harvest plant matter, (ii) an improvement in the composition of the harvested material (e.g. improved sugar acid ratios, improved oil composition, increased nutritional value, reduction of anti-nutritional compounds, increased consumer health benefits) and/or (iii) an increased/facilitated ability to harvest the crop, improved processability of the crop and/or better storage stability/shelf life. Increased yield of an agricultural plant means that, where it is possible to take a quantitative measurement, the yield of a product of the respective plant is increased by a measurable amount over the yield of the same product of the plant produced under the same conditions, but without application of the present invention. According to the present invention, it is preferred that the yield be increased by at least 0.5%, preferably 1%, more preferably 2%, yet more preferably 4% or more. Even more preferred is an increase in yield of at least about 5%, 10%, 15% or 20% or more.

Any, or all, of the above crop enhancements may also lead to an improved utilisation of land, i.e. land which was previously unavailable or sub-optimal for cultivation may become available. For example, plants which show an increased ability to survive in drought conditions, may be able to be cultivated in areas of sub-optimal rainfall, e.g. perhaps on the fringe of a desert or even the desert itself.

In one embodiment, the present invention provides a method of improving the tolerance of crops to abiotic stress factors by applying to the plants, plant parts, plant propagation material, or a plant growing locus, a compound of formula I. The stress factor may be selected from drought, cold temperature exposure, heat exposure, osmotic stress, waterlogging, increased soil salinity, increased concentration of minerals, exposure to ozone, exposure to strong light, limited availability of nitrogen nutrients and availability of phosphorus nutrients. In particular, the stress factor is selected from cold temperature exposure or osmotic stress (i.e. lack of water) and, most particularly, lack of water. In one aspect of the present invention, crop enhancements are made in the substantial absence of pressure from pests and/or diseases. For example pests and/or diseases may be controlled by a pesticidal treatment that is applied prior to, or at the same time as, the method of the present invention.

Crops of useful plants on which the method of the invention can be used include perennial and annual crops, such as berry plants for example blackberries, blueberries, cranberries, raspberries and strawberries; cereals for example barley, maize (com), millet, oats, rice, rye, sorghum triticale and wheat; fibre plants for example cotton, flax, hemp, jute and sisal; field crops for example sugar and fodder beet, coffee, hops, mustard, oilseed rape (canola), poppy, sugar cane, sunflower, tea and tobacco; fruit trees for example apple, apricot, avocado, banana, cherry, citrus, nectarine, peach, pear and plum; grasses for example Bermuda grass, bluegrass, bentgrass, centipede grass, fescue, ryegrass, St. Augustine grass and Zoysia grass; herbs such as basil, borage, chives, coriander, lavender, lovage, mint, oregano, parsley, rosemary, sage and thyme; legumes for example beans, lentils, peas and soya beans; nuts for example almond, cashew, ground nut, hazelnut, peanut, pecan, pistachio and walnut; palms for example oil palm; ornamentals for example flowers, shrubs and trees; other trees, for example cacao, coconut, olive and rubber; vegetables for example asparagus, aubergine, broccoli, cabbage, carrot, cucumber, garlic, lettuce, marrow, melon, okra, onion, pepper, potato, pumpkin, rhubarb, spinach and tomato; and vines for example grapes. Preferred crops include wheat, soybean and corn and, in particular, wheat and soybean.

Crops are to be understood as being those which are naturally occurring, obtained by conventional methods of breeding, or obtained by genetic engineering. They include crops which contain so-called output traits (e.g. improved storage stability, higher nutritional value and improved flavour).

Crops are to be understood as also including those crops which have been rendered tolerant to herbicides like bromoxynil or classes of herbicides such as ALS-, EPSPS-, GS-, HPPD- and PPO-inhibitors. An example of a crop that has been rendered tolerant to imidazolinones, e.g. imazamox, by conventional methods of breeding is Clearfield^{®} summer canola. Examples of crops that have been rendered tolerant to herbicides by genetic engineering methods include e.g. glyphosate- and glufosinate-resistant maize varieties commercially available under the trade names RoundupReady^{®}, Herculex I^{®} and LibertyLink^{®}.

Crops are also to be understood as being those which naturally are or have been rendered resistant to harmful insects. This includes plants transformed by the use of recombinant DNA techniques, for example, to be capable of synthesising one or more selectively acting toxins, such as are known, for example, from toxin-producing bacteria. Examples of toxins which can be expressed include δ-endotoxins, vegetative insecticidal proteins (Vip), insecticidal proteins of bacteria colonising nematodes, and toxins produced by scorpions, arachnids, wasps and fungi.

An example of a crop that has been modified to express the *Bacillus thuringiensis* toxin is the Bt maize KnockOut^{®} (Syngenta Seeds). An example of a crop comprising more than one gene that codes for insecticidal resistance and thus expresses more than one toxin is VipCot^{®} (Syngenta Seeds). Crops or seed material thereof can also be resistant to multiple types of pests (so-called stacked transgenic events when created by genetic modification). For example, a plant can have the ability to express an insecticidal protein while at the same time being herbicide tolerant, for example Herculex I^{®} (Dow AgroSciences, Pioneer Hi-Bred International).

The compound according to the invention can be used in unmodified form, but it is generally formulated into compositions in various ways using formulation adjuvants, such as carriers, solvents and surface-active substances. The formulations can be in various physical forms, e.g. in the form of dusting powders, gels, wettable powders, water-dispersible granules, water-dispersible tablets, effervescent pellets, emulsifiable concentrates, microemulsifiable concentrates, oil-in-water emulsions, oil-flowables, aqueous dispersions, oily dispersions, suspo-emulsions, capsule suspensions, emulsifiable granules, soluble liquids, water-soluble concentrates (with water or a water-miscible organic solvent as carrier), impregnated polymer films or in other forms known e.g. from the Manual on Development and Use of FAO and WHO Specifications for Pesticides, United Nations, First Edition, Second Revision (2010). Such formulations can either be used directly or diluted prior to use. The dilutions can be made, for example, with water, liquid fertilisers, micronutrients, biological organisms, oil or solvents.

The formulations can be prepared e.g. by mixing the compound of formula I (`active ingredient') with the formulation adjuvants in order to obtain compositions in the form of finely divided solids, granules, solutions, dispersions or emulsions. The active ingredient can also be formulated with other adjuvants, such as finely divided solids, mineral oils, oils of vegetable or animal origin, modified oils of vegetable or animal origin, organic solvents, water, surface-active substances or combinations thereof.

The active ingredient can also be contained in very fine microcapsules. Microcapsules contain the active ingredient in a porous carrier. This enables the active ingredient to be released into the environment in controlled amounts (e.g. slow-release). Microcapsules usually have a diameter of from 0.1 to 500 microns. They contain the active ingredient in an amount of about from 25 to 95 % by weight of the capsule weight. The active ingredient can be in the form of a monolithic solid, in the form of fine particles in solid or liquid dispersion or in the form of a suitable solution. The encapsulating membranes can comprise, for example, natural or synthetic rubbers, cellulose, styrene/butadiene copolymers, polyacrylonitrile, polyacrylate, polyesters, polyamides, polyureas, polyurethane or chemically modified polymers and starch xanthates or other polymers that are known to the person skilled in the art. Alternatively, very fine microcapsules can be formed in which the active ingredient is contained in the form of finely divided particles in a solid matrix of base substance, but the microcapsules are not themselves encapsulated.

The formulation adjuvants that are suitable for the preparation of the compositions according to the invention are known *per se.* As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, *N,N*-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethylhexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, N-methyl-2-pyrrolidone and the like.

Suitable solid carriers are, for example, talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and similar substances.

A large number of surface-active substances can advantageously be used in both solid and liquid formulations, especially in those formulations which can be diluted with a carrier prior to use. Surface-active substances may be anionic, cationic, non-ionic or polymeric and they can be used as emulsifiers, wetting agents or suspending agents or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol/alkylene oxide addition products, such as nonylphenol ethoxylate; alcohol/alkylene oxide addition products, such as tridecylalcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryltrimethylammonium chloride, polyethylene glycol esters of fatty acids, such as polyethylene glycol stearate; block copolymers of ethylene oxide and propylene oxide; and salts of mono- and di-alkylphosphate esters; and also further substances described e.g. in McCutcheon's Detergents and Emulsifiers Annual, MC Publishing Corp., Ridgewood New Jersey (1981).

Further adjuvants that can be used in pesticidal formulations include crystallisation inhibitors, viscosity modifiers, suspending agents, dyes, anti-oxidants, foaming agents, light absorbers, mixing auxiliaries, antifoams, complexing agents, neutralising or pH-modifying substances and buffers, corrosion inhibitors, fragrances, wetting agents, take-up enhancers, micronutrients, plasticisers, glidants, lubricants, dispersants, thickeners, antifreezes, microbicides, and liquid and solid fertilisers.

The compositions according to the invention can include an additive comprising an oil of vegetable or animal origin, a mineral oil, alkyl esters of such oils or mixtures of such oils and oil derivatives. The amount of oil additive in the composition according to the invention is generally from 0.01 to 10 %, based on the active ingredient to be applied. For example, the oil additive can be added to a spray tank in the desired concentration after a spray mixture has been prepared. Preferred oil additives comprise mineral oils or an oil of vegetable origin, for example rapeseed oil, olive oil or sunflower oil, emulsified vegetable oil, alkyl esters of oils of vegetable origin, for example the methyl derivatives, or an oil of animal origin, such as fish oil or beef tallow. Preferred oil additives comprise alkyl esters of C₈-C₂₂ fatty acids, especially the methyl derivatives of C₁₂-C₁₈ fatty acids, for example the methyl esters of lauric acid, palmitic acid and oleic acid (methyl laurate, methyl palmitate and methyl oleate, respectively). Many oil derivatives are known from the Compendium of Herbicide Adjuvants, 10th Edition, Southern Illinois University, 2010.

The compositions generally comprise from 0.1 to 99 % by weight, especially from 0.1 to 95 % by weight, of the compound of the present invention and from 1 to 99.9 % by weight of a formulation adjuvant which preferably includes from 0 to 25 % by weight of a surface-active substance. Whereas commercial products may preferably be formulated as concentrates, the end user will normally employ dilute formulations.

The rates of application vary within wide limits and depend on the nature of the soil, the method of application, the crop plant, the pest to be controlled, the prevailing climatic conditions, and other factors governed by the method of application, the time of application and the target crop. As a general guideline the compound of formula I may be applied at a rate of from 1 to 2000 l/ha, especially from 10 to 1000 l/ha.

Preferred formulations can have the following compositions (weight %):
Emulsifiable concentrates:

| | |
|---|---|
| active ingredient: | 1 to 95 %, preferably 60 to 90 % |
| surface-active agent: | 1 to 30 %, preferably 5 to 20 % |
| liquid carrier: | 1 to 80 %, preferably 1 to 35 % |

Dusts:

| | |
|---|---|
| active ingredient: | 0.1 to 10 %, preferably 0.1 to 5 % |
| solid carrier: | 99.9 to 90 %, preferably 99.9 to 99 % |

Suspension concentrates:

| | |
|---|---|
| active ingredient: | 5 to 75 %, preferably 10 to 50 % |
| water: | 94 to 24 %, preferably 88 to 30 % |
| surface-active agent: | 1 to 40 %, preferably 2 to 30 % |

Wettable powders:

| | |
|---|---|
| active ingredient: | 0.5 to 90 %, preferably 1 to 80 % |
| surface-active agent: | 0.5 to 20 %, preferably 1 to 15 % |
| solid carrier: | 5 to 95 %, preferably 15 to 90 % |

Granules:

| | |
|---|---|
| active ingredient: | 0.1 to 30 %, preferably 0.1 to 15 % |
| solid carrier: | 99.5 to 70 %, preferably 97 to 85 % |

The following Examples further illustrate, but do not limit, the invention.

| Wettable powders | a) | b) | c) |
|---|---|---|---|
| active ingredient | 25 % | 50% | 75 % |
| sodium lignosulfonate | 5 % | 5 % | - |
| sodium lauryl sulfate | 3 % | - | 5 % |
| sodium diisobutylnaphthalenesulfonate | - | 6% | 10% |
| phenol polyethylene glycol ether | - | 2 % | - |
| (7-8 mol of ethylene oxide) | | | |
| highly dispersed silicic acid | 5 % | 10% | 10% |
| Kaolin | 62% | 27% | - |

The combination is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient | 25 % | 50% | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The combination is thoroughly mixed with the adjuvants and the mixture is thoroughly ground in a suitable mill, affording powders that can be used directly for seed treatment.

| Emulsifiable concentrate | |
|---|---|
| active ingredient | 10 % |
| octylphenol polyethylene glycol ether | 3 % |
| (4-5 mol of ethylene oxide) | |
| calcium dodecylbenzenesulfonate | 3 % |
| castor oil polyglycol ether (35 mol of ethylene oxide) | 4% |
| Cyclohexanone | 30% |
| xylene mixture | 50% |

Emulsions of any required dilution, which can be used in plant protection, can be obtained from this concentrate by dilution with water.

| Dusts | a) | b) | c) |
|---|---|---|---|
| active ingredient | 5 % | 6% | 4% |
| Talcum | 95 % | - | - |
| Kaolin | - | 94% | - |
| mineral filler | - | - | 96% |

Ready-for-use dusts are obtained by mixing the combination with the carrier and grinding the mixture in a suitable mill. Such powders can also be used for dry dressings for seed.

| Extruder granules | |
|---|---|
| active ingredient | 15 % |
| sodium lignosulfonate | 2% |
| carboxymethylcellulose | 1 % |
| Kaolin | 82% |

The combination is mixed and ground with the adjuvants, and the mixture is moistened with water. The mixture is extruded and then dried in a stream of air.

| Coated granules | |
|---|---|
| active ingredient | 8% |
| polyethylene glycol (mol. wt. 200) | 3 % |
| Kaolin | 89% |

The finely ground combination is uniformly applied, in a mixer, to the kaolin moistened with polyethylene glycol. Non-dusty coated granules are obtained in this manner.

### Suspension concentrate

| | |
|---|---|
| active ingredient | 40% |
| propylene glycol | 10% |
| nonylphenol polyethylene glycol ether (15 mol of ethylene oxide) | 6% |
| Sodium lignosulfonate | 10% |
| carboxymethylcellulose | 1 % |
| silicone oil (in the form of a 75 % emulsion in water) | 1 % |
| Water | 32 % |

The finely ground combination is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

### Flowable concentrate for seed treatment

| | |
|---|---|
| active ingredient | 40% |
| propylene glycol | 5% |
| copolymer butanol PO/EO | 2% |
| Tristyrenephenole with 10-20 moles EO | 2% |
| 1,2-benzisothiazolin-3-one (in the form of a 20% solution in water) | 0.5 % |
| monoazo-pigment calcium salt | 5% |
| Silicone oil (in the form of a 75 % emulsion in water) | 0.2 % |
| Water | 45.3 % |

The finely ground combination is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

### Slow Release Capsule Suspension

28 parts of the compound of the invention are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The capsule suspension formulation contains 28% of the active ingredient. The medium capsule diameter is 8-15 microns. The resulting formulation is applied to seeds as an aqueous suspension in an apparatus suitable for that purpose.

The amount of a compound according to the invention to be applied, will depend on various factors, such as the subject of the treatment, such as, for example plants, soil or seeds; the type of treatment, such as, for example spraying, dusting or seed dressing; the purpose of the treatment, such as, for example prophylactic or therapeutic; or the application time.

When applied to the useful plants the compound of the invention is typically applied at a rate of 5 to 2000 g a.i./ha, particularly 10 to 1000 g a.i./ha, e.g. 50, 75, 100 or 200 g a.i./ha.

In agricultural practice the application rates of the compound according to the invention depend on the type of effect desired, and typically range from 20 to 4000 g of total composition per hectare.

The timing of application of the composition of the invention to the useful plants or their locus will depend on the crop type and the crop enhancement required. For example, the compound of formula I may be applied before an expected drought to provide protection from its effects or at a particular plant growth stage to provide a protective effect and/or preserve/enhance yield in the presence of stress. In wheat, for example, the compound of formula I may be applied during stem elongation or booting and up to the middle of heading (at or between BBCH 30-55). In soybean, for example, the compound of formula I may be applied at or between growth stages R1 and R3.

When the composition according to the invention is used for treating seed, rates of 0.001 to 50 g of a compound of formula I per kg of seed, preferably from 0.01 to 10g per kg of seed, are generally sufficient.

Normally, in the management of a crop a grower would use one or more other agronomic chemicals in addition to the compound of the present invention. Examples of agronomic chemicals include pesticides, such as acaricides, bactericides, fungicides, herbicides, insecticides, nematicides, as well as plant nutrients and plant fertilizers. For example, the compound of the present invention may be used in combination with a further fungicide, as detailed in WO 2008/131901. In particular, the compound of the invention may be used in combination with a strobilurin fungicide (for example, azoxystrobin, picoxystrobin), a triazole fungicide (for example, cyproconazole, difenoconazole, propiconazole, prothioconazole) or an SDHI fungicide (e.g. bixafen, fluxapyroxad, pydiflumetofen).

Accordingly, the present invention provides for the use of a combination or composition according to the present invention together with one or more pesticides, plant nutrients or plant fertilizers. The combination may also encompass specific plant traits incorporated into the plant using any means, for example conventional breeding or genetic modification.

Suitable examples of plant nutrients or plant fertilizers are calcium sulfate (CaSO₄), calcium nitrate (Ca(NO₃)₂.4H₂O), calcium carbonate (CaCO₃), potassium nitrate (KNO₃), magnesium sulfate (MgSO₄), potassium hydrogen phosphate (KH₂PO₄), manganese sulfate (MnSO₄), copper sulfate (CuSO₄), zinc sulfate (ZnSO₄), nickel chloride (NiCl₂), cobalt sulfate (CoSO₄), potassium hydroxide (KOH), sodium chloride (NaCl), boric acid (H₃BO₃) and metal salts thereof (Na₂MoO₄). The nutrients may be present in an amount of 5% to 50% by weight, preferably of 10% to 25% by weight or of 15% to 20% by weight each. Preferred additional nutrients are urea ((NH₂)₂CO), melamine (C₃H₆N₆), potassium oxide (K₂O), and inorganic nitrates. The most preferred additional plant nutrient is potassium oxide. Where the preferred additional nutrient is urea, it is present in an amount of generally 1% to 20% by weight, preferably 2% to 10% by weight or of 3% to 7% by weight.

The compound of the present invention can also be used in combination with one or more of the following crop enhancement compounds:
Plant growth regulators including: abscisic acid, aminoethoxyvinyl glyine, ancymidol, butralin, carbaryl, chlormequat, chlorphonium, chlorpropham, cyclanilide, daminozide, dikegulac, dimethipin, ethephon, flumetralin, flurprimidol, fluoridamid, forchlorfenuron, fosamine, gibberellic acid, glyphosine, isopyrimol, jasmonic acid, maleic hydrazide, mefluidide, mepiquat, methylcyclopropene, paclobutrazol, piproctanyl, prohexadione, prohexadione-calcium, prohydrojasmon, propham, tetcyclacis, thidiazuron, tributyl phosphorotrithioate, tiaojiean, trinexapac, trinexapac-ethyl, 2,3,5-tri-iodobenzoic acid, uniconzole.

Plant activators including: acibenzolar, acibenzolar-S-methyl, chitosan, probenazole, *Reynoutria sachalinensis* extract, tiadinil.

Plant hormones including: abscisic acid (ABA), auxins (4-CPA, 2,4-D, 2,4-DB, 2,4-DEP, dichlorprop, fenoprop, indole-3-acetic acid (IAA), indole-3-butyric acid (IBA), 1-naphthaleneacetic acid (NAA), 1-naphthol, tryptophan), brassinosteroids, cytokinins (1,3-diphenyl urea, 2iP, 4-hydroxyphenethyl alcohol, adenine, benzyladenine, kinetin, thidiazuron, zeatin), ethylene, ethylene inhibitors (1-methylcyclopropene, aviglycine), ethylene releasers (ACC, etacelasil, ethephon, glyoxime), gibberellin (GA1, GA2, gibberellic acid GA3, GA4, GA5, GA6, GA7, GA8, GA9, GA10, GA11, GA12, GA13, GA14, GA15, GA16, GA17, GA18, GA19, GA20, GA21, GA22, GA23, GA24, GA25, GA26, GA27, GA28, GA29, GA30, GA31, GA32, GA33, GA34, GA35, GA36, GA37, GA38, GA39, GA40, GA41, GA42, GA43, GA44, GA45, GA46, GA47, GA48, GA49, GA50, GA51, GA52, GA53, GA54, GA55, GA56, GA57, GA58, GA59, GA60, GA61, GA62, GA63, GA64, GA65, GA66, GA67, GA68, GA69, GA70, GA71, GA72, GA73, GA74, GA75, GA76, GA77, GA78, GA79, GA80, GA81, GA82, GA83, GA84, GA85, GA86, GA87, GA88, GA89, GA90, GA91, GA92, GA93, GA94, GA95, GA96, GA97, GA98, GA99, GA100, GA101, GA102, GA103, GA104, GA105, GA106, GA107, GA108, GA109, GA110, GA111, GA112, GA113, GA114, GA115, GA116, GA117, GA118, GA119, GA120, GA121, GA122, GA123, GA124, GA125, GA126, GA127, GA128, GA129, GA130, GA131, GA132, GA133, GA134, GA135, GA136), jasmonates (jasmonic acid, methyl jasmonate), salicylates (salicylic acid), strigolactones (GR24, strigol, strigyl acetate, orobanchol, orobanchyl acetate, deoxystrigol, sorgolactone).

Defoliants including: calcium cyanamide, dimethipin, endothal, ethephon, merphos, metoxuron, pentachlorophenol, thidiazuron, tribufos.

Nutrition adapters including: fertilisers (nitrogen, phosphorous, potassium), macronutrients (calcium, magnesium, sulfur), micronutrients (boron, copper, iron, chloride, manganese, molybdenum, zinc), non-essential nutrients (cobalt, silicon, nickel), amino acids (Isabion^{®}, Quantis^{®}, Hyt^{®}), iron chelate (Sequestrene^{®}), nitrogen fixing bacteria (Rhizobium), phosphorous solubilizing bacteria (*Penicillium bilaii* (JumpStart^{®})).

Pesticides with secondary crop enhancement effects: azoxystrobin, difenoconazole, isopyrazam, pyraclostrobin, sedaxane, thiamethoxam, trinexapac-ethyl.

Other crop enhancement compounds including: growth stimulators (24-epi brassinolide, 28-homobrassinolide, brassinolide, brassinolide-ethyl, DCPTA, forchlorfenuron, hymexazol, prosuler, pyripropanol, triacontanol), karrikins (KAR1, KAR2, KAR3, KAR4), lipo-chitooliogosaccharides, polyamines, unclassified plant growth regulators (2,4,5-T, 2-hydrazinoethanol, bachmedesh, benzofluor, buminafos, carvone, chlorfluren, chlorflurenol, choline chloride, ciobutide, clofencet, clofibric acid, cloprop, cloxyfonac, cyanamide, cyclanilide, cycloheximide, cyprosulfamide, dichlorflurenol, dimexano, epocholeone, ethylchlozate, fenridazon, flurenol, fuphenthiourea, furalane, heptopargil, hexafluoroacetone trihydrate, holosulf, inabenfide, isoprothiolane, karetazan, lead arsenate, MCPB, methasulfocarb, pydanon, sintofen, tecnazene, triapenthenol).

The term "fungicide" as used herein means a compound that controls, modifies, or prevents the growth of fungi. The term "fungicidally effective amount" means the quantity of such a compound or combination of such compounds that is capable of producing an effect on the growth of fungi. Controlling or modifying effects include all deviation from natural development, such as killing, retardation and the like, and prevention includes barrier or other defensive formation in or on a plant to prevent fungal infection.

The term "herbicide" as used herein means a compound that controls or modifies the growth of plants. The term "herbicidally effective amount" means the quantity of such a compound or combination of such compounds that is capable of producing a controlling or modifying effect on the growth of plants. Controlling or modifying effects include all deviation from natural development, for example killing, retardation, leaf burn, albinism, dwarfing and the like.

The term "insecticide" as used herein means a compound that controls or modifies the growth of insects. The term "insecticidally effective amount" means the quantity of such a compound or combination of such compounds that is capable of killing, controlling, or infecting insects, retarding the growth or reproduction of insects, reducing an insect population, and/or reducing damage to plants caused by insects.

The term "nematicide" as used herein means a compound that controls or modifies the growth of nematodes. The term "nematicidally effective amount" means the quantity of such a compound or combination of such compounds that is capable of killing, controlling, or infecting nematodes, retarding the growth or reproduction of nematodes, reducing a nematode population, and/or reducing damage to plants caused by nematodes.

The term "locus" as used herein means fields in or on which plants are growing, or where seeds of cultivated plants are sown, or where seed will be placed into the soil. It includes soil, seeds, and seedlings, as well as established vegetation.

The term "plants" refers to all physical parts of a plant, including seeds, seedlings, saplings, roots, tubers, stems, stalks, foliage, and fruits.

The term "plant propagation material" denotes all generative parts of a plant, for example seeds or vegetative parts of plants such as cuttings and tubers. It includes seeds in the strict sense, as well as roots, fruits, tubers, bulbs, rhizomes, and parts of plants.

Pesticidal agents referred to herein using their common name are known, for example, from "The Pesticide Manual", 15th Ed., British Crop Protection Council 2009.

Various aspects and embodiments of the present invention will now be illustrated in more detail by way of example and the following Figures in which:

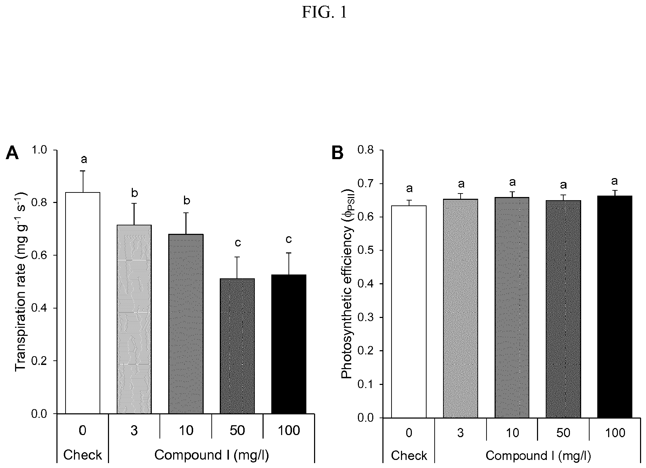

FIGURE 1 shows the dose-response of compound Ion the transpiration rate between 0 and 24 hours (A) and the operating quantum efficiency of photosystem II (φPSII) at 6 hours (B) of detached wheat (*Triticum aestivum* var. Arina) leaves. Values are means ± SD of five replications. Different letters indicate significant differences between treatments at p ≤ 0.05.

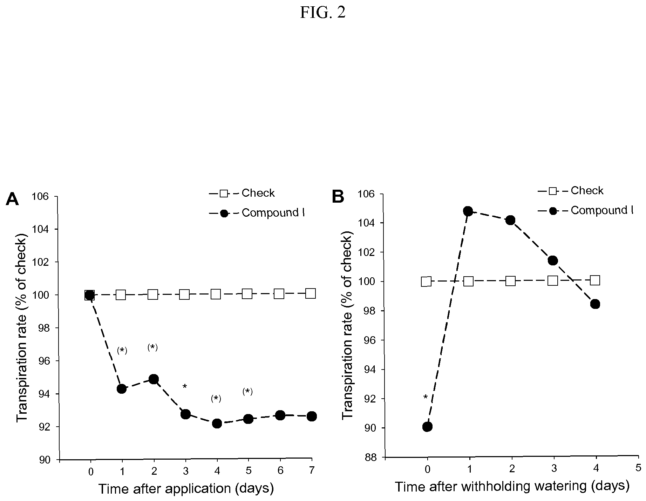

FIGURE 2 shows the effect of foliar treatment with compound I on the transpiration rate of wheat (*Triticum aestivum* var. Taifun) plants under constant soil water content (A) during soil drying (B). Values are means of nine replications. Statistically significant differences from check are indicated as following: ^{∗}, p ≤ 0.05; ^{(∗)}, p ≤ 0.1. Transpiration rate three days before application was used as covariate for statistical analysis.

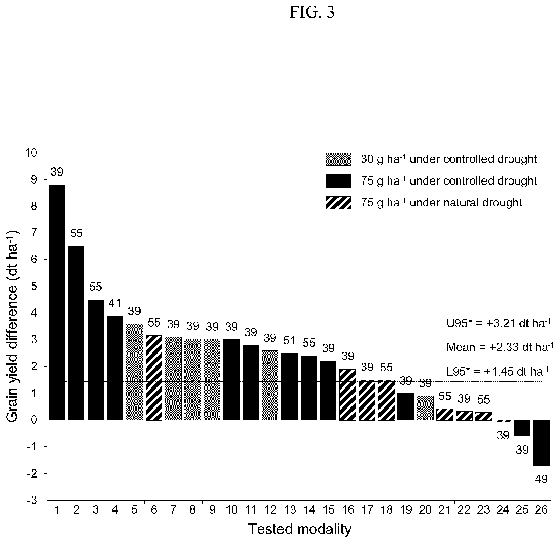

FIGURE 3 shows the grain yield difference in compound I treatments *versus* untreated check under controlled (filled bars) and natural (hatched bars) drought stress conditions at reproductive period. Application rate of compound I was 30 (gray bars) or 75 g ha⁻¹ (filled or hatched black bars). The application timing (BBCH) is given on the top of the bars. Tested modalities were (location, country, year): Borgo S. Pietro, IT, 2015 (**24**); Dongargaone, IN, 2015 (**1**, **2**); Dongargaone, IN, 2016 (**12**); Fogia, IT, 2015 (**15**, **20**); Jerome, US, 2014 (**10, 14**); Jerome, US, 2015 (**5, 11**); Kaha, EG, 2014 (**4, 26**); Kaha, EG, 2015 (**3, 19**); Kaha, EG, 2016 (**7**); Mandleshwar, IN, 2016 (**9**); Marsiliana, IT, 2015 (**6**); Matinez (*var. Baguette 601*)*,* AR, 2014 (**16, 18**); Matinez (*var. SI100*)*,* AR, 2014 (**17, 21**); Sanwer, IN, 2016 (**8**); Simandre, FR, 2015 (**22, 23**); Woodland, US, 2014 (**13, 25**). * U95 and L95 are the upper and lower limits of the 95% confidence interval of the mean (paired t-test with *p* ≤ 0.01; n = 26).

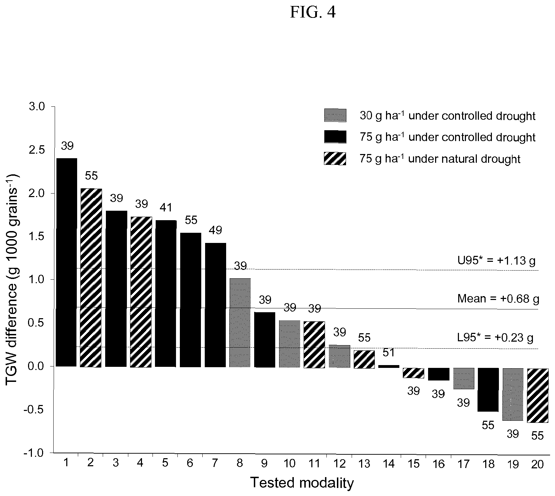

FIGURE 4 Thousand grain weight difference in compound I treatments *versus* untreated check under controlled (filled bars) and natural (hatched bars) drought stress conditions at reproductive period. Application rate of compound I was 30 (gray bars) or 75 g ha⁻¹ (filled or hatched black bars). The application timing (BBCH) is given on the top of the bars. Tested modalities were (location, country, year): Borgo S. Pietro, IT, 2015 (**15**); Dongargaone, IN, 2015 (**3, 18**); Dongargaone, IN, 2016 (**17**); Fogia, IT, 2015 (**1, 19**); Kaha, EG, 2014 (**5, 7**); Kaha, EG, 2015 (**6, 9**); Kaha, EG, 2016 (**8**); Mandleshwar, IN, 2016 (**12**); Marsiliana, IT, 2015 (**20**); Matinez (*var. Baguette 601*)*,* AR, 2014 (**4**, **13**); Matinez (*var. SI100),* AR, 2014 (**2, 11**); Sanwer, IN, 2016 (**10**); Woodland, US, 2014 (**14, 16**). * U95 and L95 are the upper and lower limits of the 95% confidence interval of the mean (paired t-test with *p* ≤ 0.01; n = 20).

### EXAMPLES

### Example 1a - Detached leaf transpiration and photosynthesis analysis

Winter wheat (*Triticum aestivum* L.) of the variety *Arina* was used for the detached leaf transpiration assay. Plants were grown under optimum conditions in growth chambers until BBCH 12. The seedlings were dark-adapted for one hour; the second leaf was cut under water and directly placed into a 1.5 mL test-tube filled with 1 mL of compound I solution. The solution was prepared by dissolving compound I in dimethyl sulfoxide (DMSO) and diluting in water to the final concentrations of 3, 10, 50 and 100 mg L⁻¹. After weighing the initial weight of the leaf-tube-system, the leaves were placed in growth chambers at 25°C, 60% relative humidity and a light intensity of 150 µmol m⁻² s⁻¹ at 14 hours photoperiod. Transpiration was quantified by measuring the weight of the leaf-tube-system after 6 and 24 hours. Tubes without leaves solely filled with water were used to correct for evaporation. At 6 hours, the operating quantum efficiency of photosystem II (φPSII), which is a proxy of the photosynthetic activity, was monitored under growth conditions from the middle of the leaf using a PAM-2500 fluorometer (Walz, Effeltrich, Germany). The experimental design was a randomized complete block design with five replications for each treatment; one experimental unit was one leaf per test-tube. Statistical analysis (ANOVA) was done with Agstat 1.6 / ACSAP 4.29.

Compound I significantly decreased leaf transpiration in a dose-dependent manner (Fig. 1 A). This effect was clearly visible already within 6 hours of treatment at 50 and 100 mg L⁻¹; for the two lower concentrations (3 and 10 mg L⁻¹), transpiration decreased only little within the first 6 hours but significantly during the remaining 18 hours of the experiment. Analysis of the operating quantum efficiency of photosystem II (φPSII), which is a proxy of the photosynthetic activity, did not show an impact of the treatment with compound I (Fig. 1 B). This observation implies that the - decrease of transpiration (H₂O release) by compound I had no negative effect on photosynthesis (CO₂ uptake).

### Example 1b - Whole plant transpiration analysis

For whole plant transpiration analysis, spring wheat (*Triticum aestivum* L.) of the variety *Taifun* was grown under pest free conditions in 1.2 L growth columns filled with a field soil (sandy loam). Plants were daily watered to a target soil water content of 0.25 g H₂O g⁻¹ dry soil. Plant growth and transpiration analysis was in growth chambers at 25/18 °C (day/night), 60 % relative humidity and a light intensity of 600 µmol m⁻² s⁻¹ at 14 hours of photoperiod. Transpiration was measured by monitoring the weight of the plant-pot-system with an automated weighing system. Application of compound I formulated as EC 100 at 75 g ha⁻¹ was done with a track sprayer at 200 L ha⁻¹ when plants were at BBCH 23. Transpiration was monitored at optimal watering for seven days after application, afterwards watering was stopped. The experimental layout was a randomized complete block design with nine replications per treatment; one experimental unit was two plants per pot. The transpiration before treatment was used as covariant for statistical analysis (ANOVA, Agstat 1.6 / ACSAP 4.29).

Within one day, transpiration decreased by about 8 % in compound I treated plants compared to untreated control plants (Fig. 2 A). This effect was consistent for at least seven days. When irrigation was withheld eight days after application, transpiration decreased strongly due to the decreasing soil water content. However, this transpiration decrease was delayed in compound I treated plants resulting in a transiently higher transpiration rate compared to untreated control plants (Fig. 2 B). In general, the reduction of transpiration in compound I treated plants had no negative impact on the biomass accumulation. At the end of the experiment the shoot dry weight of compound I and control plants were for both treatments 6.3 ± 0.4 g plant⁻¹.

### Example 1c - Crop Enhancement effect on Wheat under drought conditions in the field

Durum wheat (plot size 24m²) was treated with a single application at BBCH GS 39 (flag leaf stage) with the compound of formula I at a rate of 75.0 g a.i/ha. The plants were split into non-irrigated (only rainfed) and irrigated with 50% of evapotranspiration compensation. Untreated check plants were also included in both water supply conditions. These water supply conditions were maintained during the reproductive stages of plant growth (BBCH 55-73). The trial was carried out with six replicates.

At the end of the trial, a 12m² plot was harvested from each of four replicates for each water supply condition. Table 1 below shows the difference in four crop yield parameters. As can be seen, treatment with compound I under both non-irrigated and irrigated conditions led to an increase in all four factors.

**TABLE 1**

| Treatment | Grain Yield (dT/Ha)¹ | No. of grains per ear² | TGW (g)¹ | Protein content (%) |
|---|---|---|---|---|
| Untreated, non-irrigated | 53.35 | 36.75 | 51.04 | 12.48 |
| Compound I, non-irrigated | 57.73 | 37.88 | 51.16 | 12.68 |
| Untreated, 50% ET compensation | 58.60 | 39.00 | 44.86 | 14.85 |
| Compound I, 50% ET compensation | 60.60 | 42.08 | 45.78 | 15.45 |

| | | | | |
|---|---|---|---|---|
| ¹ adjusted to 10% standard moisture ² average of 10 ears per plot | | | | |

In addition to the above factors, the Normalised Difference Vegetation Index (NDVI) was also assessed. This is an estimate of the photosynthetically absorbed radiation over the crop surfaces and allows an estimate of the Leaf Area Index in order to track plant growth and vigour. The NDVI was measured several times during the trial with two handheld crop devices with active light source optical sensors: GreenSeeker HCS-100 (7 measurements) and RapidSCAN CS-45 (5 measurements).

Table 2a below shows the results with the GreenSeeker HCS-100 and Table 2b with the RapidSCAN CS-45. As can be seen, measurements with both devices showed a constant positive increased of NDVI value in crops treated with the compound of formula I compared to untreated check conditions under non-irrigated conditions and some increases under 50% ET compensation conditions.

**Table 2a**

| Treatment | BBCH 69(1) | BBCH 69(2) | BBCH 73 | BBCH 75-83 | BBCH 83-85 | BBCH 85 | BBCH 87 |
|---|---|---|---|---|---|---|---|
| Untreated, non-irrigated | 0.765 | 0.727 | 0.650 | 0.525 | 0.385 | 0.327 | 0.153 |
| Compound I, non-irrigated | 0.788 | 0.747 | 0.672 | 0.557 | 0.468 | 0.375 | 0.185 |
| Untreated, 50% ET compensation | 0.815 | 0.788 | 0.757 | 0.700 | 0.647 | 0.520 | 0.320 |
| Compound I, 50% ET compensation | 0.820 | 0.787 | 0.750 | 0.705 | 0.673 | 0.572 | 0.464 |

**Table 2b**

| Treatment | BBCH 69 | BBCH 73 | BBCH 83-85 | BBCH 85 | BBCH 87 |
|---|---|---|---|---|---|
| Untreated, non-irrigated | 0.575 | 0.548 | 0.323 | 0.265 | 0.083 |
| Compound I, non-irrigated | 0.592 | 0.625 | 0.393 | 0.320 | 0.083 |
| Untreated, 50% ET compensation | 0.635 | 0.635 | 0.580 | 0.465 | 0.137 |
| Compound I, 50% ET compensation | 0.663 | 0.657 | 0.572 | 0.538 | 0.204 |

### Example 1d - Crop Enhancement effect on Wheat under drought conditions in the field

Spring wheat (plot size 30m²) was treated with a single application at BBCH GS 41 (early boot stage) or 49 (first awns visible) with the compound of formula I at a rate of 75.0 g a.i/ha. The plants were grown under reduced irrigation as were untreated check plants. This water supply condition was maintained during the reproductive stages of plant growth (BBCH 55-89). The trial was carried out with six replicates.

At the end of the trial, a 20m² plot was harvested from each of five replicates. Table 3 below shows the difference in four crop yield parameters. As can be seen, treatment with compound I under reduced irrigation led to an increase in all four factors when the compound of formula I was applied at BBCH 41 and in one factor when applied at BBCH 49.

**TABLE 3**

| Treatment | Grain Yield (dT/Ha)¹ | No. of grains per ear2 | TGW (g)¹ | Hectolitre weight (kg/Hl) |
|---|---|---|---|---|
| Untreated, non-irrigated | 44.10 | 50.00 | 40.18 | 85.04 |
| Compound I, non-irrigated, BBCH 41 | 48.00 | 50.80 | 41.56 | 85.68 |
| Compound I, non-irrigated, BBCH 49 | 42.30 | 46.70 | 41.46 | 84.96 |

| | | | | |
|---|---|---|---|---|
| ¹ adjusted to 10% standard moisture ² average of 20 ears per plot | | | | |

### Example 1e - Further field trials

Wheat field trials were designed as randomized complete blocks with six replicates. Sowing, fertilization and general crop maintenance were done in accordance to locally accepted best practice. Crop protection maintenance products were applied preventatively only if required across all trial area (check and experimental plots and boundary areas) including locally registered seed treatment products, herbicides and insecticides. In case of potential disease attack, DMI and/or contact fungicides were applied preventatively. Application of fungicides from Qₒ inhibitors (strobilurines) and SDHI groups were not allowed to avoid possible interaction with compound I experimental treatments. Any products with plant growth regulator effects were excluded as well. Pesticides were applied not less than three to four days before or after experimental applications of compound I.

Following assessments were taken: general phytotoxicity at 7 and 14 days after application, general pest damage ratings before harvest, grain yield adjusted to 10% standard moisture (calculation based on fresh grain weight and grain moisture at harvest), thousand grain weight (TGW) adjusted to 10% standard moisture.

Entire plots or only central treated areas were harvested manually using cutters with stationary threshers (trials located in Argentina, Egypt and India) or with small-plot combine-harvesters (trials located in France, Italy and USA).

Single trial statistical analysis of variance (ANOVA) was done with Agstat 1.6 / ACSAP 4.29. Multi-trial analysis was based on paired t-test with comparison of compound I experimental treatments *versus* untreated checks and was done with TIBCO^{®} Spotfire^{®} 7.0.1.

### (a) Field trials with controlled drought stress conditions

To minimize risk of environmental impacts from rain on drought stress period and level, all proposed locations were validated through internal Environment and Crop Modelling process. This modelling allowed to calculate the potential drought stress intensity through estimation of climatic cumulative water deficit (sum of all daily water deficit during reproductive stage of wheat development). Daily water deficit was calculated as difference between daily precipitation and daily evapotranspiration by wheat plants. Thirty-eight candidate locations were proposed as suitable for drought stress trials. We performed field trials at fifteen locations from which we present results from the eleven disease-free trials that originated from seven locations: Egypt (Kaha), Italy (Foggia), India (Dongargaon, Mandleshwar and Sanwer) and USA (Woodland, CA; Jerome, ID).

Each field trial had two adjacent blocks: well-watered (WW) block with untreated check plots used for stress level estimation and grain yield reference and water-stressed (WS) block with experimental treatments including untreated check plots. Plot size varied between trials from 8.45 m² (Woodland, US) up to 30 m² (Kaha, EG) and harvested plot size was from 8.45 m² (Woodland, US) up to 20.7 m² (India). Seven locally adapted drought sensitive commercial varieties of spring and winter bread wheat (*Triticum aestivum* L.) and durum wheat (*Triticum durum* Desf.) were tested: var. *Massimo Meridio* (Foggia, IT), var. *Saha 94* and *Sods 12* (Kaha, EG), var. *GW322* and *GW366* (India), var. *Alturas* (Jerome, US) and var. *Summit 515* (Woodland, US).

To manage drought stress, three types of water irrigation systems were used: precise drip irrigation (Kaha, EG; Foggia, IT; Woodland, US), solid-set sprinkler irrigation (Jerome, US) and flood irrigation (all sites in India). Plants in WW blocks were well irrigated from sowing till harvest to compensate 100% of evapotranspiration demand, targeting the optimum yield achievable in the trial area. Plants in WS blocks were irrigated from planting till the beginning of pre-stress period exactly at the same level of water supply as in WW conditions. Pre-stress period was initiated one to four weeks before BBCH 59 (end of heading) but not earlier than BBCH 39 by graduate withholding of water to deplete excess soil moisture with objective to expose plants to targeted drought stress conditions at BBCH 59. During targeted transient drought stress period from BBCH 59 till harvest only deficient irrigation practice was used. If required, emergency irrigation cycles were maintained to prevent severe plant damage from drought. Soil moisture level was monitored with a solid state electrical resistance sensing device (Watermark 200SS, Irrometer Co., Riverside, CA, USA) at two soil horizons of 15 and 35 cm. Target drought stress level was -20/-40% grain yield reduction in WS untreated check plots comparing to WW untreated check plots. Drought stress level varied from -1% to -59% (-0.5 dt ha⁻¹ to -42 dt ha⁻¹) with average of - 23% (-15 dt ha⁻¹) grain yield reduction in WS plants *versus* WW crop across 11 trials.

Single application of compound I formulated as EC 100 at 30 or 75 g ha⁻¹ was done with hand-held boom or motorized knapsack sprayers at 140-300 L ha⁻¹ when plants were at BBCH 39-41 or BBCH 51-55.

### (b) Field trials with natural (uncontrolled) drought stress conditions

During 2014 and 2015 seasons, 15 open field trials were placed in typical commercial cereal growing areas of Argentina, France and Italy known for their high probability of sub-optimal yields caused by a natural drought stress occurring at reproductive stages. In the current study we review five trials from Argentina (Coronel Martinez de Hoz), France (Simandre) and Italy (Marsiliana and Borgo Santo Pietro) reported as disease-free experiments with drought stress conditions occurred at reproductive stage.

Harvested plot sizes were 5.6 m² in Argentina, 9 m² in Marsiliana (IT), 12.5 m² in Simandre (FR) and 20 m² in Santo Pietro (IT). Five locally adapted drought sensitive commercial varieties of winter bread wheat (*Triticum aestivum* L.) and durum wheat (*Triticum durum* Desf.) were tested: var. *Simeto* (S. Pietro, IT), var. *SI100* and *Baguette 601* (AR), var. *Svevo* (Marsiliana, IT) and var. *SYMoisson* (Simandre, FR).

Drought stress occurrence, timing and level were estimated by considering a) the difference between actual precipitations and long-term average precipitation for the crop growing period, and b) the yield reduction compared to non-stressed plants of the same variety (in case of irrigation) or *versus* optimal varietal characteristics known for favorable non-stressed conditions and/or year in the same geographical location.

Single application of compound I formulated as EC 100 at 75 g ha⁻¹ was done with hand-held boom or motorized knapsack sprayers at 200-300 L ha⁻¹ when plants were at BBCH 39 or BBCH 55.

### (c) Results

In order to study the effect of compound I on grain yield under drought stress at reproductive stages in wheat, 29 open field trials were placed. From these, 16 trials were reported as disease-free based on the pest damage rating, meaning without symptoms of diseases in upper-ground parts of the plants.

The group of disease-free trials included 26 modalities of single treatments of compound I formulated as EC 100 at 30 or 75 g ha⁻¹ applied at BBCH 39 to 55. Compound I did not cause any phytotoxic effects on wheat plants in all trials at both 7 and 14 days after application.

Coefficient of variation (CV) for grain yield adjusted to 10% standard moisture in single trials varied from 3.69% up to 13.05% (average CV was at 8.38%). The CV for thousand grain weight (TGW) adjusted to 10% standard moisture varied from 2.24% up to 10.34% (average CV was at 5.41%). Single trial ANOVA did not detect any significant effect at p ≤ 0.05 of compound I on grain yield adjusted to 10% standard moisture and TGW compared to untreated check.

Multitrial analysis (MTA) based on paired t-test performed for all modalities identified a significant average grain yield increase with compound I treatment compared to untreated check in disease-free situations of +2.33 dt ha⁻¹ (+5.2%) with a 95% confidence interval (CI) of the mean between +1.45 dt ha⁻¹ and +3.21 dt ha⁻¹ (Fig. 3). The CI gives the yield benefit a grower can expect on average in 95% of the situations. Considering only trials under controlled drought stress conditions, the yield increase was +2.86 dt ha⁻¹ (+6.0%) with 95% CI of [+1.69; +4.03] dt ha⁻¹. Under these conditions, average grain yield increase with 75 g compound I ha⁻¹ was +0.23 dt ha⁻¹ compared to the rate of 30 g ha⁻¹.

Thousand grain weight adjusted to 10% standard moisture was reported for 13 disease-free trials (20 modalities). Under all drought-stressed conditions (controlled and natural drought stress at reproductive) the MTA confirmed a mean TGW increase with compound I *versus* untreated check at 0.68 g 1000 seeds⁻¹ (+1.9 %) with 95 % CI of [+0.23; +1.13] g 1000 seeds⁻¹ (Fig. 4).

### Example 2a - Crop Enhancement effect on Soybean under drought conditions

Soybean plants were grown in pots. The plants were treated at R1 (36 days after sewing) or R3 (44 days after sewing) with the compound of formula I at 0.75 l/ha. An untreated control plant was also included. After treatment, the plants were subjected to drought conditions until the end of the trial at day 65. Five replicates of the control and each treatment were harvested for analysis of yield and enzymatic activity. Table 4 below shows the results of the yield analysis.

**TABLE 4**

| Treatment | Dry weight of pods (% of control) |
|---|---|
| Control | 100 |
| Compound I 0.75 l/ha @ R1 | 114.8 |
| Compound I 0.75 l/ha @ R3 | 122.7 |

Enzymatic analysis showed an increase in the production of the enzyme glutathione reductase in plants treated with the compound of formula (I) compared to the untreated control. This production of this enzyme has been found to be increased in transgenic plants which are tolerant to abiotic stress.

### Example 2b - Crop Enhancement effect on Soybean under drought conditions

Soybean plants were grown in pots. The plants were treated at R1 (33 days after sewing) or three days before R3 (40 days after sewing) with the compound of formula I at 0.75 l/ha. An untreated control plant was also included. After treatment, the plants were subjected to drought conditions for 21 days before being allowed to grow under optimal conditions for a further 25 days. Eight replicates of the control and each treatment were harvested for analysis of yield and chlorophyll content. Tables 5 (dry weight of pods), 6 (digital biomass) and 7 (average plant colour) below shows the results of the yield analysis.

**TABLE 5**

| Treatment | Dry weight of pods (% of control) |
|---|---|
| Control | 100 |
| Compound I 0.75 l/ha @ R1 | 106.3 |
| Compound I 0.75 l/ha @ R3 - 3 days | 105.8 |

**TABLE 6**

| Days after application | | | | | | | | | | | | |
|---|---|---|---|---|---|---|---|---|---|---|---|---|
| Application at R1 | -1 | 3 | 7 | 10 | 14 | 21 | 24 | 28 | 31 | 36 | 41 | 43 |
| Application at R3 -3 | -7 | -3 | 0 | 3 | 7 | 14 | 17 | 21 | 24 | 29 | 34 | 36 |

| Digital biomass¹ (increase/decrease (%) compared to negative control treatment) | | | | | | | | | | | | |
|---|---|---|---|---|---|---|---|---|---|---|---|---|
| Compound I 0.75 l/ha @ R1 | 1.5 | 2.6 | 0.4 | 1.9 | 2.4 | -1.5 | -1.1 | 1.2 | -3.7 | -6.3 | -9.2 | -6.9 |
| Compound I 0.75 l/ha @ R3 - 3 days | -1.2 | 2.2 | 3.6 | 4.3 | 2.7 | 1.5 | 4.4 | 4.4 | -2.4 | -0.9 | -3.3 | 1.6 |

| | | | | | | | | | | | | |
|---|---|---|---|---|---|---|---|---|---|---|---|---|
| ¹ A proxy for shoot dry weight | | | | | | | | | | | | |

**TABLE 7**

| Days after application | | | | | | | | | | | | |
|---|---|---|---|---|---|---|---|---|---|---|---|---|
| Application at R1 | -1 | 3 | 7 | 10 | 14 | 21 | 24 | 28 | 31 | 36 | 41 | 43 |
| Application at R3 -3 | -7 | -3 | 0 | 3 | 7 | 14 | 17 | 21 | 24 | 29 | 34 | 36 |
| Average plant colour¹ (increase/decrease (%) compared to negative control treatment) | | | | | | | | | | | | |
| Compound I 0.75 l/ha @ R1 | 0.3 | 1.3 | 0.4 | -0.4 | -0.6 | -0.3 | -0.3 | -1.6 | -3.0 | -0.5 | -1.4 | -2.0 |
| Compound I 0.75 l/ha @ R3 - 3 days | 0.1 | 0.4 | 0.4 | 1.3 | 0.4 | -0.2 | 1.4 | 0.2 | 1.3 | -0.5 | -2.3 | -3.9 |

| | | | | | | | | | | | | |
|---|---|---|---|---|---|---|---|---|---|---|---|---|
| ¹ a proxy for leaf chorophyll content | | | | | | | | | | | | |

## Claims

1. A method of enhancing crops in increasing tolerance and/or resistance to abiotic stress factors, by applying to the plants, plant parts, plant propagation material, or a plant growing locus, a compound of formula I

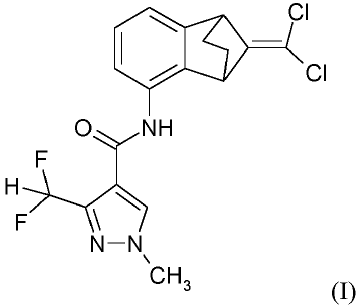

2. The method of claim 1, wherein the abiotic stress factor is selected from drought, cold temperature exposure, heat exposure, osmotic stress, waterlogging, increased soil salinity, increased concentration of minerals, exposure to ozone, exposure to strong light, limited availability of nitrogen nutrients and availability of phosphorus nutrients.

3. The method of claim 2, wherein the abiotic stress factor is drought.

4. The method of any one of claims 1 to 3, wherein the crop is wheat or soybean.

5. The method of any one of claims 1 to 4, wherein the crop is a crop of transgenic plants.

6. The method of any one of claims 1 to 5, wherein the compound of formula I is applied in combination with a fungicidally active compound.

7. Use of a compound of formula I to enhance crops in increasing tolerance and/or resistance to abiotic stress factors.

8. The use of claim 7, wherein the abiotic stress factor is selected from drought, cold temperature exposure, heat exposure, osmotic stress, waterlogging, increased soil salinity, increased concentration of minerals, exposure to ozone, exposure to strong light, limited availability of nitrogen nutrients and availability of phosphorus nutrients.

9. The use of claim 8, wherein the abiotic stress factor is drought.

10. The use of any one of claims 7 to 9, wherein the crop is wheat or soybean.

11. The use of any one of clams 7 to 10, wherein the crop is a crop of transgenic plants.

12. The use of any one of claims 7 to 11, wherein the compound of formula I is applied in combination with a fungicidally active compound.

## Patentansprüche

1. Verfahren zur Verbesserung von Kulturpflanzen durch Erhöhung der Toleranz und/oder Widerstandfähigkeit gegenüber abiotischen Stressfaktoren durch Anwendung einer Verbindung der Formel I 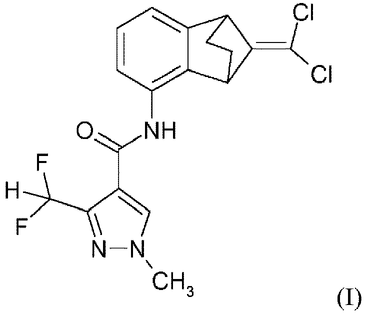 auf die Pflanzen, Pflanzenteile, Pflanzenfortpflanzungsmaterial oder einen Standort, an dem die Pflanzen wachsen.

2. Verfahren nach Anspruch 1, wobei der abiotische Stressfaktor aus Dürre, Einwirkung von kalten Temperaturen, Hitzeeinwirkung, osmotischem Stress, Staunässe, erhöhtem Salzgehalt des Bodens, erhöhter Mineralienkonzentration, Ozoneinwirkung, starker Lichteinwirkung, begrenzter Verfügbarkeit von Stickstoff- und Phosphornährstoffen ausgewählt ist.

3. Verfahren nach Anspruch 2, wobei es sich bei dem abiotischen Stressfaktor um Dürre handelt.

4. Verfahren nach einem der Ansprüche 1 bis 3, wobei es sich bei der Kulturpflanze um Weizen oder Sojabohne handelt.

5. Verfahren nach einem der Ansprüche 1 bis 4, wobei es sich bei der Kulturpflanze um eine Kulturpflanze transgener Pflanzen handelt.

6. Verfahren nach einem der Ansprüche 1 bis 5, wobei die Verbindung der Formel I in Kombination mit einem fungiziden Wirkstoff angewendet wird.

7. Verwendung einer Verbindung der Formel I zur Verbesserung von Kulturpflanzen durch Erhöhung der Toleranz und/oder Widerstandfähigkeit gegenüber abiotischen Stressfaktoren.

8. Verwendung nach Anspruch 7, wobei der abiotische Stressfaktor aus Dürre, Einwirkung von kalten Temperaturen, Hitzeeinwirkung, osmotischem Stress, Staunässe, erhöhtem Salzgehalt des Bodens, erhöhter Mineralienkonzentration, Ozoneinwirkung, starker Lichteinwirkung, begrenzter Verfügbarkeit von Stickstoff- und Phosphornährstoffen ausgewählt ist.

9. Verwendung nach Anspruch 8, wobei es sich bei dem abiotischen Stressfaktor um Dürre handelt.

10. Verwendung nach einem der Ansprüche 7 bis 9, wobei es sich bei der Kulturpflanze um Weizen oder Sojabohne handelt.

11. Verwendung nach einem der Ansprüche 7 bis 10, wobei es sich bei der Kulturpflanze um eine Kulturpflanze transgener Pflanzen handelt.

12. Verwendung nach einem der Ansprüche 7 bis 11, wobei die Verbindung der Formel I in Kombination mit einem fungiziden Wirkstoff angewendet wird.

## Revendications

1. Procédé d'amélioration de cultures en augmentant la tolérance et/ou la résistance à des facteurs de stress abiotique, par application aux végétaux, aux parties de végétaux, au matériel de propagation végétale, ou un acide de croissance de végétal, d'un composé de formule I

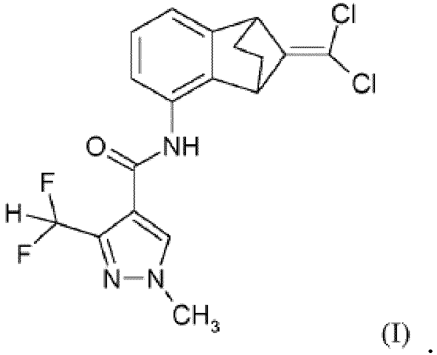

2. Procédé selon la revendication 1, le facteur de stress abiotique étant choisi parmi la sécheresse, une exposition à des températures froides, une exposition à la chaleur, un stress osmotique, un engorgement, une salinité du sol augmentée, une concentration de minéraux augmentée, une exposition à l'ozone, une exposition à de la lumière forte, et une disponibilité de nutriments azotés et une disponibilité de nutriments phosphorés limitées.

3. Procédé selon la revendication 2, le facteur de stress abiotique étant la sécheresse.

4. Procédé selon l'une quelconque des revendications 1 à 3, la culture étant de blé ou de soja.

5. Procédé selon l'une quelconque des revendications 1 à 4, la culture étant une culture de végétaux transgéniques.

6. Procédé selon l'une quelconque des revendications 1 à 5, le composé de formule I étant appliqué en combinaison avec un composé actif sur le plan fongicide.

7. Utilisation d'un composé de formule I pour améliorer des cultures en augmentant la tolérance et/ou la résistance à des facteurs de stress abiotique.

8. Utilisation selon la revendication 7, le facteur de stress abiotique étant choisi parmi la sécheresse, une exposition à des températures froides, une exposition à la chaleur, un stress osmotique, un engorgement, une salinité du sol augmentée, une concentration de minéraux augmentée, une exposition à l'ozone, une exposition à de la lumière forte, et une disponibilité de nutriments azotés et une disponibilité de nutriments phosphorés limitées.

9. Utilisation selon la revendication 8, le facteur de stress abiotique étant la sécheresse.

10. Utilisation selon l'une quelconque des revendications 7 à 9, la culture étant de blé ou de soja.

11. Utilisation selon l'une quelconque des revendications 7 à 10, la culture étant une culture de végétaux transgéniques.

12. Utilisation selon l'une quelconque des revendications 7 à 11, le composé de formule I étant appliqué en combinaison avec un composé actif sur le plan fongicide.
